(19) Europäisches Patentamt
European Patent Office
Office européen des brevets

(11) **EP 2 833 444 A1**

(12) **EUROPEAN PATENT APPLICATION**
published in accordance with Art. 153(4) EPC

(43) Date of publication:
**04.02.2015 Bulletin 2015/06**

(51) Int Cl.:
*H01M 4/38* (2006.01)          *H01M 4/36* (2006.01)

(21) Application number: **13767333.1**

(86) International application number:
**PCT/JP2013/057214**

(22) Date of filing: **14.03.2013**

(87) International publication number:
**WO 2013/146300 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2012 JP 2012081956**

(71) Applicant: **TODA KOGYO CORP.**
**Hiroshima 732-0828 (JP)**

(72) Inventors:
• **KONO, Yoshiteru**
**Otake-shi**
**Hiroshima 739-0652 (JP)**

• **OGISU, Kenji**
**Tokyo 105-6123 (JP)**
• **HAYASHI, Kazuyuki**
**Otake-shi**
**Hiroshima 739-0652 (JP)**
• **IWAMI, Katsuji**
**Otake-shi**
**Hiroshima 739-0652 (JP)**
• **OKITA, Tomoko**
**Otake-shi**
**Hiroshima 739-0652 (JP)**

(74) Representative: **Raynor, Stuart Andrew**
**J A Kemp**
**14 South Square**
**Gray's Inn**
**London WC1R 5JJ (GB)**

(54) **NEGATIVE ELECTRODE ACTIVE MATERIAL PARTICLE POWDER FOR NONAQUEOUS ELECTROLYTE SECONDARY BATTERIES, METHOD FOR PRODUCING SAME, AND NONAQUEOUS ELECTROLYTE SECONDARY BATTERY**

(57)    The present invention relates to a negative electrode active substance for non-aqueous electrolyte secondary batteries comprising composite particles comprising metal particles, and a thermosetting resin or a carbonized product of the thermosetting resin, the composite particles having an average particle diameter of 5 to 100 $\mu$m; and a lithium ion secondary battery using the negative electrode active substance for non-aqueous electrolyte secondary batteries. The lithium ion secondary battery of the present invention is a non-aqueous electrolyte secondary battery that is prevented from suffering from volume expansion owing to occlusion of Li therein.

FIG. 1

EP 2 833 444 A1

**Description**

<u>TECHNICAL FIELD</u>

The present invention provides a negative electrode (anode) active substance for non-aqueous electrolyte secondary batteries, which is prevented from suffering from volume expansion owing to occlusion of Li therein.

<u>BACKGROUND ART</u>

With the recent rapid development of portable and cordless electronic devices such as audio-visual (AV) devices and personal computers, there is an increasing demand for secondary batteries having a small size, a light weight and a high energy density as a power source for driving these electronic devices. Under these circumstances, lithium ion secondary batteries having advantages such as a high charge/discharge voltage and a large charge/discharge capacity have been noticed.

In the lithium ion secondary batteries, as a negative electrode material thereof, there has been extensively used graphite carbon. However, a capacity of the graphite carbon has been already increased near a theoretical limit value thereof.

Further, in order to achieve high densification of lithium ion batteries, there is a rapidly increasing demand for development of novel negative electrode materials having a large specific capacity. In consequence, there have been made various studies on metal materials such as Sn-base materials and Si-based materials as an alternative material for the carbon-based negative electrode materials.

These metal materials have such an advantage that they can exhibit an increased capacity and therefore can solve the problem encountered in the conventional carbon-based materials. On the other hand, the metal materials have such a problem that they have a shortened cycle life owing to breakage of an electrode structure which tends to be caused by volume expansion thereof owing to occlusion of Li therein.

Hitherto, with respect to the negative electrode active substances such as metal particles, there are known technologies of coating a surface of the respective particles with a resin (Patent Literature 1), technologies of fixing a negative electrode with a resin (Patent Literatures 2 to 8), and the like.

<u>CITATION LISTS</u>

<u>PATENT LITRATURE</u>

Patent Literature 1: Japanese Translation of International Patent Application Laid-open (KOHYO) No. 2006-525625
Patent Literature 2: Japanese Patent Application Laid-open (KOKAI) No. 2011-048987
Patent Literature 3: Japanese Patent Application Laid-open (KOKAI) No. 2011-044310
Patent Literature 4: Japanese Patent Application Laid-open (KOKAI) No. 2008-021635
Patent Literature 5: Japanese Patent Application Laid-open (KOKAI) No. 2006-313742
Patent Literature 6: Japanese Patent Application Laid-open (KOKAI) No. 2006-286645
Patent Literature 7: Japanese Patent Application Laid-open (KOKAI) No. 2004-178922
Patent Literature 8: Japanese Translation of International Patent Application Laid-open (KOHYO) No. 2009-507338

<u>SUMMARY OF INVNETION</u>

<u>PROBLEM TO BE SOLVED BY THE INVENTION</u>

There have not been attained any negative electrode active substances that are sufficiently prevented from suffering from volume expansion owing to occlusion of Li therein.

That is, in the technologies described in the above Patent Literatures 1 to 8, the metal negative electrode materials used therein which serve as an alternative material for the conventional carbon-based materials have merits such as a large amount of Li occluded therein and a large capacity, but tend to suffer from demerits such as breakage of an electrode structure owing to volume expansion thereof.

A technical subject of the present invention is to provide a negative electrode active substance for secondary batteries which is prevented from suffering from volume expansion, by coating Li-active metal particles that tend to be susceptible to volume expansion thereof owing to occlusion of Li therein, with a thermosetting resin.

MEAN FOR SOLVING THE PROBLEM

That is, according to the present invention, there is provided a negative electrode active substance for non-aqueous electrolyte secondary batteries comprising composite particles comprising metal particles and a thermosetting resin, the composite particles having an average particle diameter of 5 to 100 $\mu$m (Invention 1).

Also, according to the present invention, there is provided the negative electrode active substance for non-aqueous electrolyte secondary batteries as defined in the above Invention 1, wherein a content of the thermosetting resin in the negative electrode active substance is 5.0 to 30% by weight (Invention 2).

In addition, according to the present invention, there is provided a negative electrode active substance for non-aqueous electrolyte secondary batteries comprising composite particles comprising metal particles and a carbonized product of a thermosetting resin, the composite particles having an average particle diameter of 5 to 100 $\mu$m (Invention 3).

Also, according to the present invention, there is provided the negative electrode active substance for non-aqueous electrolyte secondary batteries as defined in the above Invention 1 or 2, wherein a content of the carbonized product of the thermosetting resin in the negative electrode active substance is 0.1 to 20% by weight (Invention 4).

Also, according to the present invention, there is provided the negative electrode active substance for non-aqueous electrolyte secondary batteries as defined in any one of the above Inventions 1 to 4, wherein the thermosetting resin is a thermosetting phenol resin or a thermosetting epoxy resin (Invention 5).

Also, according to the present invention, there is provided the negative electrode active substance for non-aqueous electrolyte secondary batteries as defined in any one of the above Inventions 1 to 5, wherein at least one carbon selected from the group consisting of a crystalline carbon and a carbon nanotube is incorporated inside of particles of the negative electrode active substance for non-aqueous electrolyte secondary batteries, or allowed to be present on a surface of the respective particles (Invention 6).

Further, according to the present invention, there is provided a process for producing the negative electrode active substance as defined in the above Invention 3, comprising the steps of granulating the metal particles, and the thermosetting phenol resin or the thermosetting epoxy resin to form a composite material thereof, and then subjecting the composite material to heat treatment at a temperature of 300 to 1200°C in a reducing atmosphere (Invention 7).

Furthermore, according to the present invention, there is provided a lithium ion secondary battery using the negative electrode active substance for non-aqueous electrolyte secondary batteries as defined in any one of the above Inventions 1 to 6, as a negative electrode material (Invention 8).

EFFECT OF THE INVENTION

By coating Li-active metal particles with a thermosetting resin, it is possible to prevent volume expansion of the resulting negative electrode active substance. In addition, since the obtained negative electrode has a high density, an electric capacity thereof per a unit volume can be increased.

BRIEF DESCRIPTION OF DRAWINGS

FIG. 1 is an electron micrograph showing a particle shape of a negative electrode active substance for non-aqueous electrolyte secondary batteries obtained in Example 1.

FIG. 2 is an enlarged view of FIG. 1.

PREFERRED EMBODIMENTS FOR CARRYING OUT THE INVENTION

The construction of the present invention is described in detail below.

The particles of the negative electrode active substance for non-aqueous electrolyte secondary batteries according to the present invention (hereinafter referred to as "negative electrode active substance particles") comprise composite particles comprising metal particles and a thermosetting resin.

In the present invention, as the thermosetting resin, there is preferably used a thermosetting phenol resin or a thermosetting epoxy resin.

The content of the thermosetting resin in the negative electrode active substance according to the present invention is preferably 5 to 30% by weight. When the content of the thermosetting resin in the negative electrode active substance is less than 5% by weight, it is not possible to obtain granulated particles coated with the resin. When the content of the thermosetting resin in the negative electrode active substance is more than 30% by weight, the resulting negative electrode active substance tends to be insufficient in filling property and dispersibility in the resin. The content of the thermosetting resin in the negative electrode active substance is more preferably 5 to 20% by weight.

In the negative electrode active substance according to the present invention, the thermosetting resin may be used in a carbonized state. The content of the carbonized product of the thermosetting resin in the negative electrode active substance is preferably 0.1 to 20% by weight. When the content of the carbonized product of the thermosetting resin in the negative electrode active substance is less than 0.1% by weight, it may be difficult to maintain the negative electrode active substance in a granulated state. When the content of the carbonized product of the thermosetting resin in the negative electrode active substance is more than 20% by weight, the resulting negative electrode active substance tends to be insufficient in filling property and dispersibility in the resin. The content of the carbonized product of the thermosetting resin in the negative electrode active substance is more preferably 0.5 to 10% by weight.

The negative electrode active substance according to the present invention may also comprise at least one carbon selected from the group consisting of a crystalline carbon such as ketjen black and acetylene black, and a carbon nanotube inside of the particles or on a surface of the respective particles. By incorporating these carbon materials in the negative electrode active substance, it is possible to improve a conductivity thereof.

The content of the crystalline carbon or the carbon nanotube in the negative electrode active substance according to the present invention is preferably 0.1 to 70% by weight. When the content of the crystalline carbon or the carbon nanotube in the negative electrode active substance is less than 0.1% by weight, the resulting negative electrode active substance tends to be insufficient in an effect of enhancing an electric conductivity thereof. When the content of the crystalline carbon or the carbon nanotube in the negative electrode active substance is more than 70% by weight, the resulting negative electrode active substance tends to be insufficient in filling property and dispersibility in the resin. The content of the crystalline carbon or the carbon nanotube in the negative electrode active substance is more preferably 1 to 50% by weight.

The particle shape of the negative electrode active substance according to the present invention is preferably a granular shape, a spherical shape or an elliptical shape. When using the negative electrode active substance having the above particle shape, a paste prepared therefrom can exhibit a reduced viscosity when applied on a current collector.

The average particle diameter (D50: average secondary particle diameter) of the negative electrode active substance according to the present invention is 5 to 100 $\mu$m. When the average particle diameter of the negative electrode active substance is less than 5 $\mu$m, the resulting negative electrode active substance tends to be deteriorated in packing density and tends to be undesirably increased in reactivity with an electrolyte solution. On the other hand, when the average particle diameter of the negative electrode active substance is more than 100 $\mu$m, the resulting negative electrode active substance tends to be deteriorated in dispersibility in a resin when forming an electrode therefrom. The average particle diameter of the negative electrode active substance is preferably 8 to 50 $\mu$m.

Next, the process for producing the negative electrode active substance according to the present invention is described.

The negative electrode active substance according to the present invention may be produced by either a dry method or a wet method in which metal particles are granulated with a thermosetting phenol resin or a thermosetting epoxy resin to obtain a composite material thereof. If required, the resulting composite material may be further subjected to heat treatment in a reducing atmosphere, thereby obtaining the negative electrode active substance.

The metal particles used in the present invention are particles of at least one metal selected from the group consisting of Si, Sn, Al, Mg, Na, Fe, Cd, Sb, Pb and Bi, preferably particles of at least one metal selected from the group consisting of Si, Sn, Al, Fe, Cd, Sb, Pb and Bi, and more preferably particles of Si or Sn. The average particle diameter of the metal particles used in the present invention is preferably about 10 nm to about 5 $\mu$m.

It is desirable that the surface of the respective metal particles used in the present invention is previously subjected to lipophilic treatment. By subjecting the metal particles to the lipophilic treatment, it is possible to more readily obtain a negative electrode active substance having a spherical shape.

The lipophilic treatment of the metal particles may be suitably conducted by a method of treating the metal particles with a coupling agent such as a silane coupling agent, a titanate coupling agent and an aluminum coupling agent, a method of dispersing the metal particles in an aqueous solvent comprising a surfactant to absorb the surfactant on the surface of the respective particles, or the like.

First, the method using the thermosetting phenol resin is described.

As the silane coupling agent, there may be used those silane coupling agents having a hydrophobic group, an amino group or an epoxy group. Examples of the silane coupling agent having a hydrophobic group include vinyl trichlorosilane, vinyl triethoxysilane, vinyl tris($\beta$-methoxy)silane, etc. Examples of the silane coupling agent having an amino group include $\gamma$-aminopropyl triethoxysilane, N-$\beta$(aminoethyl)-$\gamma$-aminopropyl trimethoxysilane, N-$\beta$(aminoethyl)-$\gamma$-aminopropyl methyl dimethoxysilane, N-phenyl-$\gamma$-aminopropyl trimethoxysilane, etc. Examples of the silane coupling agent having an epoxy group include $\gamma$-glycidoxypropyl methyl diethoxysilane, $\gamma$-glycidoxypropyl trimethoxysilane, $\beta$-(3,4-epoxycyclohexyl)trimethoxysilane, etc.

As the titanate coupling agent, there may be used isopropyl triisostearoyl titanate, isopropyl tridecyl benzenesulfonyl titanate, isopropyl tris(dioctyl pyrophosphate)titanate, etc.

As the surfactant, there may be used commercially available surfactants. Of these surfactants, preferred are those surfactants having a functional group capable of bonding to the metal particles, or a hydroxyl group that is present on a surface of the respective metal particles. The ionicity of the surfactant is preferably cationic or anionic.

Any of the above treatment methods can achieve the object of the present invention. Of these treatment methods, in view of good adhesion to the phenol resin, preferred are the treatment methods using those silane coupling agents having an amino group or an epoxy group.

The amount of the above coupling agent or surfactant with which the metal particles may be treated is preferably 0.1 to 10% by weight based on the weight of the metal particles.

The method of producing the composite material comprising the metal particles and the thermosetting phenol resin as used in the present invention is as follows.

Examples of the phenols used in the present invention include phenol; and phenolic hydroxyl group-containing compounds, e.g., alkyl phenols such as m-cresol, p-cresol, p-tert-butyl phenol and o-propyl phenol, and halogenated phenols obtained by substituting a part or whole of an alkyl group of the alkyl phenols with a chlorine atom or a bromine atom.

The aldehydes used in the present invention may have any configuration of formalin and paraldehyde. Examples of the aldehydes include formaldehyde, acetaldehyde, furfural, glyoxal, acrolein, crotone aldehyde, salicylaldehyde and glutaraldehyde. Of these aldehydes, most preferred is formaldehyde.

The molar ratio of the aldehydes to the phenols is preferably 1.0 to 4.0. When the molar ratio of the aldehydes to the phenols is less than 1.0, it may be difficult to form particles, or curing of the resin tends to hardly proceed, so that the resulting particles tend to have a low strength. When the molar ratio of the aldehydes to the phenols is more than 4.0, the unreacted aldehydes remaining in the aqueous medium after completion of the reaction tends to be increased. The molar ratio of the aldehydes to the phenols is more preferably 1.2 to 3.0.

As the basic catalyst used in the present invention, there may be mentioned those basic catalysts ordinarily used for production of resol resins. Examples of the basic catalyst include aqueous ammonia, and alkyl amines such as hexamethylene triamine, dimethyl amine, diethyl triamine and polyethylene imine. Of these basic catalysts, especially preferred is aqueous ammonia. The molar ratio of the basic catalyst to the phenols is preferably 0.05 to 1.50. When the molar ratio of the basic catalyst to the phenols is less than 0.05, curing of the resin tends to hardly proceed sufficiently, so that it may be difficult to granulate the materials. When the molar ratio of the basic catalyst to the phenols is more than 1.50, the structure of the phenol resin tends to be adversely affected, resulting in poor granulating property thereof, so that it may be difficult to obtain particles having a large particle diameter.

In the present invention, the reaction is carried out in the aqueous medium. In this case, the concentration of solid components in the aqueous medium is preferably 30 to 95% by weight, and especially preferably 60 to 90% by weight.

The reaction solution to which the basic catalyst is added is heated until reaching a temperature range of 60 to 95°C, and reacted in this temperature range for 30 to 300 min, and preferably for 60 to 240 min to subject the phenol resin to polycondensation reaction, thereby curing the resin.

At that time, in order to obtain a composite material having a high sphericity, it is desired that the reaction solution is slowly heated. The temperature rise rate upon heating the reaction solution is preferably 0.5 to 1.5°C/min, and more preferably 0.8 to 1.2°C/min.

In this case, in order to well control a particle diameter of the resulting particles, it is desired to control the stirring rate. The stirring rate is preferably 100 to 1000 rpm.

After completion of the curing, the resulting reaction product is cooled to a temperature of not higher than 40°C, so that the metal particles are dispersed in the binder resin, and it is possible to obtain a water dispersion of the composite material that is in the form of particles onto the surface of which the metal particles are exposed.

The water dispersion comprising the composite material is subjected to solid-liquid separation by an ordinary method such as filtration, centrifugal separation, etc., and then to washing and drying, thereby obtaining the aimed composite material.

Next, the method using the thermosetting epoxy resin is described.

As the lipophilic treatment agent, there may be used coupling agents having a lipophilic group such as titanate-based coupling agents and silane-based coupling agents, silylating agents, silicone oils, etc. Of these lipophilic treatment agents, especially preferred are those lipophilic treatment agents having a functional group (such as -NH$_2$) capable of reacting with an epoxy resin, because they have an effect of enhancing a strength of the composite material itself, etc.

Examples of the lipophilic group-containing titanate-based coupling agents include isopropyl triisostearoyl titanate, isopropyl tridecyl benzenesulfonyl titanate, isopropyl tris(dioctyl pyrophosphate)titanate, bis(dioctyl pyrophosphate)oxyacetate titanate, bis(dioctyl pyrophosphate)ethylene titanate, etc. Examples of the lipophilic group-containing silane-based coupling agents include N-β(aminoethyl) γ-aminopropyl trimethoxysilane, N-β(aminoethyl) γ-aminopropyl-methyl dimethoxysilane, γ-aminopropyl triethoxysilane, N-phenyl-γ-aminopropyl trimethoxysilane, γ-glycidoxypropylmethyl diethoxysilane and β-(3,4-epxoycyclohexyl)ethyl trimethoxysilane (the aforementioned compounds are silane-based coupling agents having a functional group capable of reacting with an epoxy resin), and vinyl trichlorosilane, vinyl triethoxysilane, vinyl tris(β-methoxyethoxy)silane, etc. Examples of the silylating agents include hexamethyl disilazane, trialkyl alkoxysilanes, trimethyl ethoxysilane, etc. Examples of the silicone oils include dimethyl silicone oils, methyl hydrogen silicone oils, etc.

The amount of the above lipophilic treatment agent used for treating the metal particles therewith is preferably 0.1 to 10% by weight based on the weight of the metal particles.

The method of producing the composite material comprising the metal particles and the thermosetting epoxy resin which may be used in the present invention is as follows.

As the bisphenols, there may be used those compounds having two or more phenolic hydroxyl groups, such as bisphenol A, bisphenol F, bisphenol S and resorcin. Of these bisphenols, bisphenol A is preferred from the standpoint of good economy.

As the epihalohydrin, there may be used epichlorohydrin, epibromohydrin, epiiodohydrin, etc. Of these epihalohydrins, preferred is epichlorohydrin.

The molar ratio of the bisphenols to the epihalohydrin is 0.5 to 1.0:1.0. When the molar ratio of the bisphenols to the epihalohydrin is less than 0.5, it may be difficult to form particles owing to adverse influence of reaction byproducts resulting from a surplus amount of the epihalohydrin, etc. When the molar ratio of the bisphenols to the epihalohydrin is more than 1.0, the curing rate of the resin tends to be increased, so that it may be difficult to obtain the composite material, or the composite material, even if obtained, tends to exhibit a wide particle size distribution.

The alkaline aqueous medium may be produced by adding an alkali such as sodium hydroxide and potassium hydroxide to water.

The reaction is conducted as follows. That is, while stirring the alkaline aqueous medium comprising the metal particles, the bisphenols and the epihalohydrin in the presence of a curing agent, the reaction mixture is heated to a temperature range of 60 to 90°C to allow a polymerization reaction thereof to proceed for about 1 to about 5 hr. Alternatively, while stirring the aqueous medium comprising the metal particles and an uncured epoxy resin in the presence of the curing agent, the reaction mixture is heated to a temperature range of 60 to 90°C to allow a curing reaction thereof to proceed for about 1 to about 8 hr.

The reaction of the present invention is thus carried out in the aqueous medium. The concentration of solid components in the aqueous medium is preferably adjusted to lie within the range of 30 to 95% by weight and especially preferably 60 to 90% by weight.

As the curing agent, there may be used acid anhydrides, amines or the like which are generally extensively known as a curing agent for epoxy resins.

As the uncured epoxy resin, there may be used epoxy-based compounds having two or more epoxy groups in a molecule thereof, such as bisphenol A modified at both ends thereof with a glycidyl ether, and polyethylene glycol modified at both ends thereof with a glycidyl ether.

In this case, in order to obtain a composite material having a high sphericity, it is desirable that the reaction mixture is slowly heated. The temperature rise rate is preferably 0.5 to 1.5°C/min, and more preferably 0.8 to 1.2°C/min.

In the reaction, in order to control a particle diameter of the resulting particles, it is desirable to control the stirring rate. The stirring rate is preferably 100 to 1000 rpm.

After completion of the curing, the resulting reaction product is cooled to a temperature of 40°C or lower, so that the metal particles are dispersed in the binder resin, and it is possible to obtain a water dispersion of the composite material that is in the form of particles on the surface of which the metal particles are exposed.

The composite material produced in the alkaline aqueous medium or the aqueous medium may be separated by an ordinary solid-liquid separation method such as filtration and centrifugal separation, and successively washed with water and then dried under heating.

The total content of the metal particles in the composite material is preferably 70 to 95% by weight based on the weight of the composite material. When the total content of the metal particles in the composite material is less than 70% by weight, the resin content in the composite material tends to be increased, so that coarse particles tend to be formed. When the total content of the metal particles in the composite material is more than 95% by weight, the resin content in the composite material tends to be deficient, so that the resulting composite material may fail to have a sufficient strength. The total content of the metal particles in the composite material is more preferably 80 to 90% by weight based on the weight of the composite material.

When incorporating the crystalline carbon or the carbon nanotube into the composite material, the crystalline carbon or the carbon nanotube may be added thereto upon the dispersing step before curing the resin. Alternatively, in the case of incorporating the carbon nanotube in the composite material, by supporting a catalyst comprising nickel or iron thereon, a carbon-containing gas may be subjected to decomposition reaction to produce the carbon nanotube thereon.

In the present invention, the heat treatment of the composite material in a reducing atmosphere may be conducted at a temperature required to decompose and carbonize the phenol resin or epoxy resin, that is, at a temperature of not lower than 300°C, preferably 400 to 1200°C, and more preferably 500 to 1000°C. When the treatment temperature is lower than 400°C, the carbonization of the phenol resin or epoxy resin tends to hardly proceed. On the other hand, when the treatment temperature is higher than 1000°C, it may be difficult to control a diameter of pores in the resulting composite particles to a desired range. In the present invention, the treatment temperature is preferably slowly increased until reaching a desired heat treatment temperature. In addition, in the heat treatment, after holding an adequate temperature for a predetermined period of time, the treatment temperature may be raised again until reaching the desired heat treatment temperature. Examples of the reducing atmosphere used in the heat treatment include nitrogen, hydrogen and a mixed gas thereof.

Next, a negative electrode comprising the negative electrode active substance particles according to the present invention is described.

When producing the negative electrode comprising the negative electrode active substance particles according to the present invention, a conducting agent and a binder are added to and mixed with the negative electrode active substance particles by an ordinary method. Examples of the preferred conducting agent include acetylene black, carbon black and graphite. Examples of the preferred binder include polytetrafluoroethylene and polyvinylidene fluoride.

The secondary battery produced by using the negative electrode comprising the negative electrode active substance particles according to the present invention comprises the above negative electrode, a positive electrode and an electrolyte.

Examples of a positive electrode active substance which may be used in the positive electrode include various positive electrode active substances such as $LiCoO_2$, $LiNiO_2$, $LiMn_2O_4$ and $LiFePO_4$. Meanwhile, the above positive electrode active substances may also comprise various different kinds of elements.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving, in addition to lithium phosphate hexafluoride, at least one lithium salt selected from the group consisting of lithium perchlorate and lithium borate tetrafluoride, etc., in the above solvent.

<u><Function></u>

It has been considered by the present inventors that in order to suppress volume expansion of the negative electrode active substance, it is effective to coat the active substance with a resin. As a result, it has been found that properties of the negative electrode active substance can be enhanced by coating the Li-active metal particles with a thermosetting resin and further graphitizing the coating resin to impart a conductivity to the active substance. The reason why the volume expansion of the negative electrode active substance can be suppressed is considered to be that by allowing the resin and/or the carbonized product thereof to be present around the metal particles, it is possible to absorb and compensate a change in volume of the metal active substance which is caused by its volume expansion owing to occlusion of Li therein.

<u>EXAMPLES</u>

The typical examples of the present invention are as follows.

The average particle diameter of the negative electrode active substance was measured using a scanning electron microscope (SEM).

The electrode density was determined as follows. That is, the sheet prepared under the following electrode sheet formation testing conditions was blanked into a 16 mm$\phi$ sheet piece. The value obtained by subtracting a weight of an aluminum foil from a weight of the thus blanked sheet was divided by a volume calculated from an area of the blanked sheet and a thickness of the blanked sheet excluding a thickness of the aluminum foil, to thereby determine the electrode density.

The calculation formula is as follows.

$$\text{Electrode density (g/cm}^3\text{)} = \text{(weight of blanked sheet} - \text{weight of aluminum foil)/(area of blanked sheet x (thickness of blanked sheet} - \text{thickness of aluminum foil))}$$

High: not less than 1.3 g/cm$^3$
Low: less than 1.3 g/cm$^3$

<u>\<Electrode Sheet Formation Testing Conditions\></u>

Using the negative electrode active substance obtained in Examples of the present invention, an electrode slurry comprising the active substance, acetylene black and PVdF at a ratio of 9:1:1 (% by weight) was prepared and applied onto an Al foil current collector using a doctor blade having a gas of 150 $\mu$m. The coated sheet was dried and then pressed by applying a pressure of 3 t/cm$^2$ thereto. The resulting sheet was visually observed to evaluate a coating condition thereof according to the following two ratings.

Good: No coating unevenness on the surface of the sheet was observed.
Poor: Coating unevenness on the surface of the sheet was observed.

<u>\<Evaluation of Charge/Discharge Characteristics\></u>

Using the negative electrode active substance obtained in Examples of the present invention, an electrode slurry comprising the active substance, acetylene black and PVdF at a ratio of 9:1:1 (% by weight) was prepared and applied onto a Cu foil, and then dried at 110°C for 3 hr. The thus obtained sheet was blanked into a 16 mm$\phi$ sheet piece, and the thus blanked sheets were press-bonded onto a current collector by applying a pressure of 1 t/cm$^2$ thereto, thereby obtaining a negative electrode comprising an electrode membrane having a thickness of 20 $\mu$m on the current collector.

Metallic lithium blanked into a 16 mm$\phi$ piece was used as a positive electrode, and 1 mol/L LiPF$_6$ solution of mixed solvent comprising EC and DMC in a volume ratio of 1:2 was used as an electrolyte solution, to thereby produce a coin cell of a CR 2032 type.

The charge/discharge characteristics were determined as follows. That is, the coin cell was charged at a current density of 0.05C under environmental conditions in a thermostat at 25°C until reaching 1.6 V, and then discharged at a current density of 0.1C until reaching 0.01 V. When the charge/discharge characteristics of the coin cell were in the level equal to or less than that of Comparative Example 1, the result was regarded as being "poor", whereas when the charge/discharge characteristics of the coin cell exceeded the level of Comparative Example 1, the result was regarded as being "good".

<u>Example 1:</u>

A 1 L flask was charged with 67.8 g of phenol, 53.9 g of formalin, 200 g of the above particles whose surface was treated with an epoxy group-containing silane coupling agent. 24.2 g of aqueous ammonia and 6 g of water, and the contents of the flask were heated to 85°C over 30 min while stirring, and then reacted and cured at that temperature for 120 min, thereby producing a composite material comprising silicon particles and a phenol resin.

Next, the contents of the flask were cooled to 30°C, and then 1.5 L of water was added thereto. Thereafter, a supernatant solution was removed from the resulting reaction solution, and the obtained lower layer precipitate was washed with water and then dried in a dryer set to 80°C for 12 hr, thereby obtaining spherical composite material particles comprising the silicon particles and the phenol resin which had an average particle diameter (D50) of 15.2 $\mu$m.

The thus obtained composite material particles had an average particle diameter of 20 $\mu$m and a resin content of 25% by weight. As a result of forming a sheet by using the composite material particles according to the above evaluation method, it was confirmed that the surface of the sheet was evaluated as being "Good", and the electrode density thereof was evaluated as being "High".

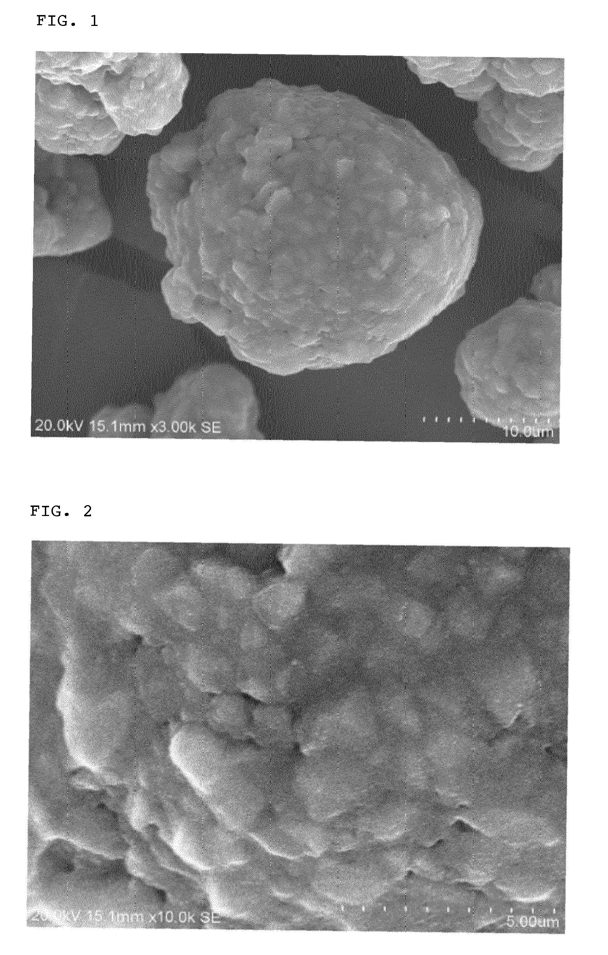

As shown in FIGS. 1 and 2, it was recognized that the resulting particles had a spherical shape in which the metal active substance was enclosed in the resin, and were densified particles having a high density.

<u>Example 2:</u>

The composite material particles obtained in the above Example 1 were subjected to heat treatment at 1000°C for 2 hr in a reducing atmosphere (N2), thereby obtaining a negative electrode active substance comprising silicon particles and carbon. Various properties of the thus obtained negative electrode active substance particles are shown in Table 1.

Examples 3 to 7 and Comparative Examples 1 to 3:

The same procedure as in Example 2 was conducted except that various conditions were changed, and the heat treatment was carried out in a temperature range between 300°C and 1200°C, thereby obtaining negative electrode active substance particles.

Production conditions for the negative electrode active substance particles as well as various properties of the thus obtained negative electrode active substance particles are shown in Table 1.

<u>Table 1</u>

| Examples and Comparative Examples | Resin coating treatment | Kind of coating resin | Coating amount | Crystalline carbon |
|---|---|---|---|---|
| Example 2 | Conducted | Phenol | 15 | Not added |
| Example 3 | Conducted | Phenol | 17 | Added |
| Example 4 | Conducted | Phenol | 19 | Added |
| Example 5 | Conducted | Phenol | 18 | Not added |
| Example 6 | Conducted | Phenol | 13 | Added |
| Example 7 | Conducted | Epoxy | 15 | Not added |
| Comparative Example 1 | Not conducted | – | – | Not added |
| Comparative Example 2 | Not conducted | – | – | Added |
| Comparative Example 3 | Conducted | Phenol | 25 | Not added |

Table 1 (continued)

| Examples and Comparative Examples | Kind of crystalline carbon | Amount of crystalline carbon (%) | Carbon nanotube | Amount added (%) |
|---|---|---|---|---|
| Example 2 | – | – | Not added | – |
| Example 3 | Ketjen black | 1.0 | Not added | – |
| Example 4 | Acetylene black | 1.2 | Not added | – |
| Example 5 | – | – | Added | 2 |
| Example 6 | Ketjen black | 1.1 | Added | 2 |
| Example 7 | – | – | Not added | – |
| Comparative Example 1 | – | – | Not added | – |
| Comparative Example 2 | Ketjen black | 1.1 | Not added | – |
| Comparative Example 3 | – | – | Not added | – |

Table 1 (continued)

| Examples and Comparative Examples | Particle diameter ($\mu$m) | Sheet surface | Initial charge/discharge capacity | Electrode density |
|---|---|---|---|---|
| Example 2 | 20 | Good | Good | High |
| Example 3 | 10 | Good | Good | High |
| Example 4 | 15 | Good | Good | High |
| Example 5 | 13 | Good | Good | High |
| Example 6 | 18 | Good | Good | High |
| Example 7 | 16 | Good | Good | High |
| Comparative Example 1 | 1 | Good | Poor | Low |
| Comparative Example 2 | 1 | Good | Poor | Low |
| Comparative Example 3 | 120 | Poor | – | – |

Form the above results, it was confirmed that the negative electrode active substance particles according to the present invention exhibited excellent initial charge/discharge characteristics. The reason therefor is considered to be that the negative electrode active substance particles according to the present invention are prevented from suffering from volume expansion owing to occlusion of Li therein. In addition, it was confirmed that the negative electrode active substance according to the present invention had a high electrode density.

INDUSTRIAL APPLICABILITY

The negative electrode active substance according to the present invention is excellent in initial charge/discharge capacity and therefore can be suitably used as negative electrode active substance particles for non-aqueous electrolyte secondary batteries.

**Claims**

1. A negative electrode active substance for non-aqueous electrolyte secondary batteries comprising composite particles comprising metal particles and a thermosetting resin, the composite particles having an average particle diameter of 5 to 100 $\mu$m.

2. The negative electrode active substance for non-aqueous electrolyte secondary batteries according to claim 1, wherein a content of the thermosetting resin in the negative electrode active substance is 5.0 to 30% by weight.

3. A negative electrode active substance for non-aqueous electrolyte secondary batteries comprising composite particles comprising metal particles and a carbonized product of a thermosetting resin, the composite particles having an average particle diameter of 5 to 100 $\mu$m.

4. The negative electrode active substance for non-aqueous electrolyte secondary batteries according to claim 3, wherein a content of the carbonized product of the thermosetting resin in the negative electrode active substance is 0.1 to 20% by weight.

5. The negative electrode active substance particles for non-aqueous electrolyte secondary batteries according to any one of claims 1 to 4, wherein the thermosetting resin is a thermosetting phenol resin or a thermosetting epoxy resin.

6. The negative electrode active substance for non-aqueous electrolyte secondary batteries according to any one of claims 1 to 5, wherein at least one carbon selected from the group consisting of a crystalline carbon and a carbon nanotube is incorporated inside of particles of the negative electrode active substance for non-aqueous electrolyte secondary batteries, or allowed to be present on a surface of the respective particles.

7. A process for producing the negative electrode active substance as claimed in claim 3, comprising the steps of granulating the metal particles, and the thermosetting phenol resin or the thermosetting epoxy resin to form a composite material thereof, and then subjecting the composite material to heat treatment at a temperature of 300 to 1200°C in a reducing atmosphere.

8. A lithium ion secondary battery using the negative electrode active substance for non-aqueous electrolyte secondary batteries as claimed in any one of claims 1 to 6, as a negative electrode material.

FIG. 1

FIG. 2

## INTERNATIONAL SEARCH REPORT

| | International application No. |
|---|---|
| | PCT/JP2013/057214 |

**A. CLASSIFICATION OF SUBJECT MATTER**
*H01M4/38*(2006.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/38, H01M4/36

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-43547 A (Hitachi Chemical Co., Ltd.),<br>01 March 2012 (01.03.2012),<br>claims; paragraphs [0053] to [0057], [0070],<br>[0071]; example 1<br>(Family: none) | 3-8<br>1,2 |
| X<br>A | JP 2011-90943 A (Sumitomo Bakelite Co., Ltd.),<br>06 May 2011 (06.05.2011),<br>claims; paragraphs [0018], [0021]; example 8<br>(Family: none) | 3-6,8<br>1,2,7 |
| X<br>A | JP 2011-76744 A (Sumitomo Bakelite Co., Ltd.),<br>14 April 2011 (14.04.2011),<br>claims; paragraphs [0030], [0034]; example 1;<br>comparative example 3<br>(Family: none) | 3-6,8<br>1,2,7 |

| [X] Further documents are listed in the continuation of Box C. | [ ] See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 May, 2013 (28.05.13) | 11 June, 2013 (11.06.13) |

| Name and mailing address of the ISA/<br>Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2013/057214

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2001-345100 A  (Hitachi Chemical Co., Ltd.), 14 December 2001 (14.12.2001), entire text (Family: none) | 1-8 |
| A | JP 2005-310760 A  (JFE Chemical Corp.), 04 November 2005 (04.11.2005), entire text & WO 2005/031898 A1    & TW 258883 B & KR 10-2006-0024325 A | 1-8 |
| A | JP 2007-220411 A  (Kuraray Co., Ltd.), 30 August 2007 (30.08.2007), entire text (Family: none) | 1-8 |

Form PCT/ISA/210 (continuation of second sheet) (July 2009)

**EP 2 833 444 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006525625 A
- JP 2011048987 A
- JP 2011044310 A
- JP 2008021635 A

- JP 2006313742 A
- JP 2006286645 A
- JP 2004178922 A
- JP 2009507338 A